(19) **Europäisches Patentamt**

**European Patent Office**

**Office européen des brevets**

(11) **EP 1 158 738 B1**

(12) **FASCICULE DE BREVET EUROPEEN**

(45) Date de publication et mention
de la délivrance du brevet:
**28.05.2003   Bulletin 2003/22**

(51) Int Cl.⁷: **H04L 27/00**

(21) Numéro de dépôt: **01201803.2**

(22) Date de dépôt: **14.05.2001**

(54) **Dispositif multimodules a comportement statique pour démodulateur programmable d'un récepteur de télévision**

Anordnung mit mehreren statischen Modulen für programmierbaren Demodulator eines Fernsehempfängers

Device having multiple static modules for programmable demodulator of a television receiver

(84) Etats contractants désignés:
**DE ES FR GB IT**

(30) Priorité: **23.05.2000  FR 0006571**

(43) Date de publication de la demande:
**28.11.2001   Bulletin 2001/48**

(73) Titulaire: **Koninklijke Philips Electronics N.V.
5621 BA Eindhoven (NL)**

(72) Inventeurs:
• **Dujardin, Eric
75008 Paris (FR)**
• **Gay-Bellile, Olivier
75008 Paris (FR)**

(74) Mandataire: **de la Fouchardière, Marie-Noelle
Société Civile "SPID"
156, Boulevard Haussmann
75008 Paris (FR)**

(56) Documents cités:
**EP-A- 0 340 978          EP-A- 0 499 763
US-A- 4 578 796          US-A- 4 800 574**

**Description**

Domaine de l'invention

L'invention concerne un dispositif comportant au moins un premier et un second modules, ledit premier module étant destiné à fournir des instructions audit second module, et ledit second module étant destiné à recevoir des données et à remplir au moins une fonction qui nécessite l'exécution d'une succession d'opérations, pour produire un résultat à partir d'une pluralité de données reçues.

L'invention concerne également un démodulateur comportant un tel dispositif, un récepteur de télévision comportant un tel démodulateur, et un système de transmission comportant un tel récepteur.

Arrière plan technologique de l'invention

La demande de brevet européen n°0340978A2 décrit un dispositif modulateur / démodulateur qui comporte trois modules. Le premier module remplit une fonction d'annulation d'écho sur des échantillons reçus. Le second module remplit une fonction de démodulation sur des échantillons qui lui sont transmis par le premier module. Enfin, le troisième module se comporte comme un contrôleur. Il déclenche les opérations des premier et second modules, et il sert d'intermédiaire pour les échanges de données, notamment du premier module vers le second module. C'est aussi lui qui reçoit les données délivrées par le second module pour les retransmettre à des modules utilisateurs.

Résumé de l'invention

L'invention concerne un dispositif d'un type différent dans lequel le premier module n'intervient pas dans la transmission des données. En particulier lorsqu'un second module produit des résultats destinés à un autre module, ces résultats sont transmis directement.

D'une façon générale, pour faciliter la validation de ce type de dispositif, et donc pour en diminuer le coût de développement, il est souhaitable de prédéfinir des créneaux temporels dans lesquels les résultats doivent être produits. Par ailleurs, pour optimiser le fonctionnement du dispositif, il est souhaitable de minimiser le nombre de créneaux temporels prévus pour la délivrance de résultats.

La définition des créneaux temporels prévus pour la délivrance de résultats pose notamment un problème lorsque plusieurs données doivent être reçues pour pouvoir produire un résultat, et lorsqu'il existe une incertitude sur la réception de ces données.

Un premier but de l'invention est d'apporter une solution à ce problème. Ce but est atteint avec un dispositif selon l'invention, tel que décrit dans le paragraphe introductif, et caractérisé en ce que :

- ledit premier module est prévu pour fournir lesdites instructions au second module dans des créneaux temporels prédéfinis, lesdites instructions contenant au moins une indication d'opération,
- ledit second module comporte un compteur d'opération destiné à indiquer l'opération suivante à exécuter, et un compteur de données destiné à comptabiliser les données reçues non utilisées,
- et ledit second module est prévu pour n'exécuter une instruction reçue que si l'indication d'opération contenue dans l'instruction reçue coïncide avec l'opération suivante à exécuter telle qu'indiquée par son compteur d'opération, et si son compteur de données indique que les données nécessaires à l'exécution de cette opération sont disponibles.

Conformément à l'invention, les instructions sont donc envoyées selon un schéma prédéfini, en indiquant l'opération qu'il est prévu d'exécuter dans le créneau temporel courant. L'opération n'est pas exécutée si les données nécessaires ne sont pas disponibles. Par ailleurs l'invention ne permet pas non plus d'exécuter une opération différente de celle prévue dans le créneau temporel courant. En particulier, il n'est pas possible de délivrer un résultat si l'opération prévue dans le créneau temporel courant n'est pas une opération qui mène à la délivrance d'un résultat.

Par ailleurs, dans ce type de dispositif, il est également souhaitable pour simplifier la validation du dispositif, que le second module délivre un résultat dans chacun des créneaux temporels prévus à cet effet, qu'il ait ou non reçu les données nécessaires pour cela.

Ce but est atteint avec un dispositif selon l'invention caractérisé en ce que ledit second module est prévu pour produire, dans des créneaux temporels prédéfinis, des résultats associés à un indicateur de validité de résultat, l'indicateur de validité de résultat étant dans un état « invalide » lorsqu'aucun résultat n'est disponible.

Brève description des figures

L'invention sera mieux comprise et d'autres détails apparaîtront dans la description qui va suivre, en regard des figures annexées, le tout donné à titre d'exemple non limitatif.

La figure 1 est un schéma décrivant un exemple d'architecture d'un dispositif selon l'invention.
La figure 2 est un schéma explicitant le fonctionnement d'un second module au sens de l'invention.
La figure 3 est un schéma d'un autre exemple de dispositif selon l'invention,
La figure 4 est un schéma d'un exemple de système de transmission selon l'invention.
La figure 5 est un schéma d'un exemple de démodulateur numérique selon l'invention.

Description d'un mode de réalisation préférentiel de l'invention

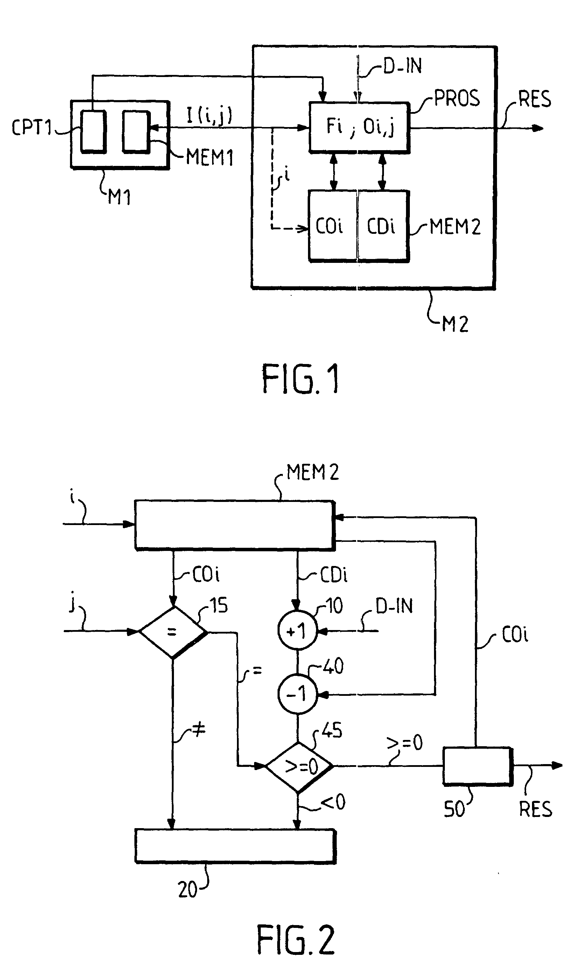

Sur la figure 1, on a représenté un exemple de dispositif selon l'invention. Ce dispositif comporte un premier et un second modules M1 et M2. Le premier module M1 est destiné à fournir des instructions I au second module M2, dans des créneaux temporels prédéterminés. A titre d'exemple, le premier module M1 comporte une mémoire MEM1 pour stocker les instructions, et un compteur CPT1 qui indique un emplacement à lire dans la mémoire MEM1, et qui est incrémenté à chaque nouveau créneau temporel. Le second module M2 est destiné à recevoir des données D-IN, et à remplir des fonctions $F_i$ qui nécessitent l'exécution d'une succession d'opérations $O_{i,j}$. A chaque nouveau créneau temporel, le module M2 va lire une instruction dans la mémoire MEM1 du premier module M1. Dans cet exemple de réalisation, une instruction I comporte une indication de fonction i, et une indication d'opération j. Le second module M2 comporte une mémoire MEM2 dans laquelle sont notamment stockés, pour chaque fonction i, un compteur d'opérations CO, et un compteur de données $CD_i$. Le compteur d'opération $CO_i$ a pour fonction d'indiquer où en est le second module dans la succession d'opérations $O_{i,j}$ à exécuter pour remplir la fonction i. Par exemple, ce compteur indique la prochaine opération à exécuter, et il est mis à jour à chaque fois qu'une opération est exécutée. Le compteur de données $CD_i$ a pour fonction d'indiquer si les données nécessaires à l'exécution d'une opération sont disponibles ou non. Par exemple, le compteur de données $CD_i$ est incrémenté d'une unité à chaque fois qu'une donnée D-IN est reçue, et décrémenté d'une unité à chaque fois qu'une donnée est consommée. Les valeurs du compteur d'opération $CO_i$ et du compteur de données $CD_i$ sont transmises à une entité de traitement PROS qui décide d'exécuter ou non l'instruction reçue I. L'entité de traitement PROS délivre des résultats RES.
Sur la figure 2, on a représenté un schéma expliquant les traitements effectués par l'entité de traitement PROS lorsqu'elle reçoit des indications de fonction i et d'opération j.

- Lorsqu'elle reçoit une donnée D-IN, elle incrémente d'une unité le compteur de données $CD_i$ qui est stocké dans la mémoire MEM2 (case 10).
- Elle lit la valeur du compteur d'opération $CO_i$ dans la mémoire MEM2 et la compare avec l'indication d'opération reçue j (case 15). Si la valeur du compteur d'opération $CO_i$ ne correspond pas à l'indication d'opération reçue j, l'instruction I n'est pas exécutée (case 20). Si le contenu du compteur d'opération $CO_i$ correspond à l'indication d'opération reçue j, l'entité de traitement vérifie si les données nécessaires à l'exécution de l'opération j sont disponibles.
- Pour cela, l'entité de traitement PROS détermine si l'exécution de l'opération j entraîne la consommation d'une donnée (c'est-à-dire s'il est nécessaire qu'une donnée soit disponible pour que l'opération j soit exécutée). Cette information est par exemple stockée dans la mémoire MEM, pour chaque opération j. Si l'exécution de l'opération j entraîne la consommation d'une donnée, le compteur de données $CD_i$ est décrémenté d'une unité (case 40).
- Puis l'entité de traitement teste la valeur du compteur de données (case 45). S'il elle est positive ou nulle l'instruction est exécutée (case 50).
- Lorsqu'une opération a été exécutée, le compteur d'opération $CO_i$ est mis à jour. Cette mise à jour consiste à décrémenter le compteur d'opération, puis à en tester la valeur. Si elle est négative, cela signifie que toutes les opérations $O_{i,j}$ relatives à la fonction i ont été exécutées. Le compteur d'opération est ré-initialisé à sa valeur initiale (c'est-à-dire au nombre d'opérations à exécuter pour remplir la fonction i, moins un).

On va maintenant décrire, en regard des tableaux I et II, le fonctionnement du dispositif selon l'invention dans un cas particulier. Le cas particulier choisi à titre d'exemple est celui dans lequel le second module M2 remplit une fonction de filtrage numérique pour décimer par deux des données d'entrée.
D'une façon générale, les filtres à décimation sont des filtres pour lesquels le débit des résultats en sortie est plus bas que le débit des données en entrée. L'équation d'un tel filtre peut s'écrire :

$$y(n) = \sum_{k=0}^{L-1} x(dn - k) . w_k \qquad (1)$$

où $y(n)$ sont les résultats produits en sortie du filtre, $x(dn-k)$ sont les données reçues en entrée, $w_k$ sont les coefficients du filtre, L est la longueur du filtre, et d est le facteur de décimation du filtre. Pour produire un résultat en sortie du filtre, il faut donc exécuter L calculs élémentaires comportant chacun une multiplication et une addition. Dans l'exemple qui va être décrit, on a considéré que L/4 calculs élémentaires de ce type pouvaient être exécutés dans un créneau temporel, c'est-à-dire qu'une opération au sens de la présente invention comportait L/4 calculs élémentaires de ce type. De plus on a considéré le cas d'une décimation par 2 (d=2). En se reportant à l'équation (1), on constate donc que deux données $x(2n-1)$ et $x(2n)$ doivent être reçues en entrée pour pouvoir produire un résultat $y(n)$ en sortie.

Dans le tableau I on a représenté le fonctionnement du dispositif tel qu'il est planifié.

TABLEAU I

| Créneau temporel | Donnée reçue | Opération à exécuter | Résultat produit |
|---|---|---|---|
| $t_0$ | | $c_0$ | |
| $t_1$ | | $c_1$ | |
| $t_2$ | $D_0$ | $c_2$ | |
| $t_3$ | | | |
| $t_4$ | | | |
| $t_5$ | $D_1$ | $c_3$ | $R_0$ |
| $t_6$ | | $c_0$ | |
| $t_7$ | | $c_1$ | |
| $t_8$ | $D_2$ | $c_2$ | |
| $t_9$ | | | |
| $t_{10}$ | | | |
| $t_{11}$ | $D_3$ | $c_3$ | $R_1$ |
| $t_{12}$ | | $c_0$ | |
| $t_{13}$ | | $c_1$ | |
| $t_{14}$ | $D_4$ | $c_2$ | |
| $t_{15}$ | | | |
| $t_{16}$ | | | |
| $t_{17}$ | $D_5$ | $c_3$ | $R_2$ |

Comme indiqué dans le tableau I :

- la décimation nécessite l'exécution de quatre opérations $c_0$, $c_1$, $c_2$ et $c_3$ pour obtenir un résultat $R_n$ où n est un entier naturel ; les opérations $c_0$ et $c_1$ ne consomment pas de données ; en revanche les opérations $c_2$ et $c_3$ en consomment chacune une ;
- des instructions sont lues par le module M2 dans la mémoire MEM1 du module M1 dans des créneaux temporels prédéterminés $t_{6n}$, $t_{6n+1}$, $t_{6n+2}$ et $t_{6n+5}$;
- une donnée d'entrée est reçue dans chaque créneau temporel $t_{3n+2}$;
- un résultat $R_n$ est généré dans un créneau temporel prédéterminé $t_{6n+5}$ à partir de deux données d'entrée $D_{2n}$ et $D_{2n+1}$.

Le tableau I représente le fonctionnement d'un dispositif selon l'invention lorsque toutes les données sont fournies dans les créneaux temporels prévus, c'est-à-dire dans les créneaux temporels $t_{3n+2}$.

Toutefois, il peut se produire qu'une ou plusieurs données ne soient pas reçues comme prévu.

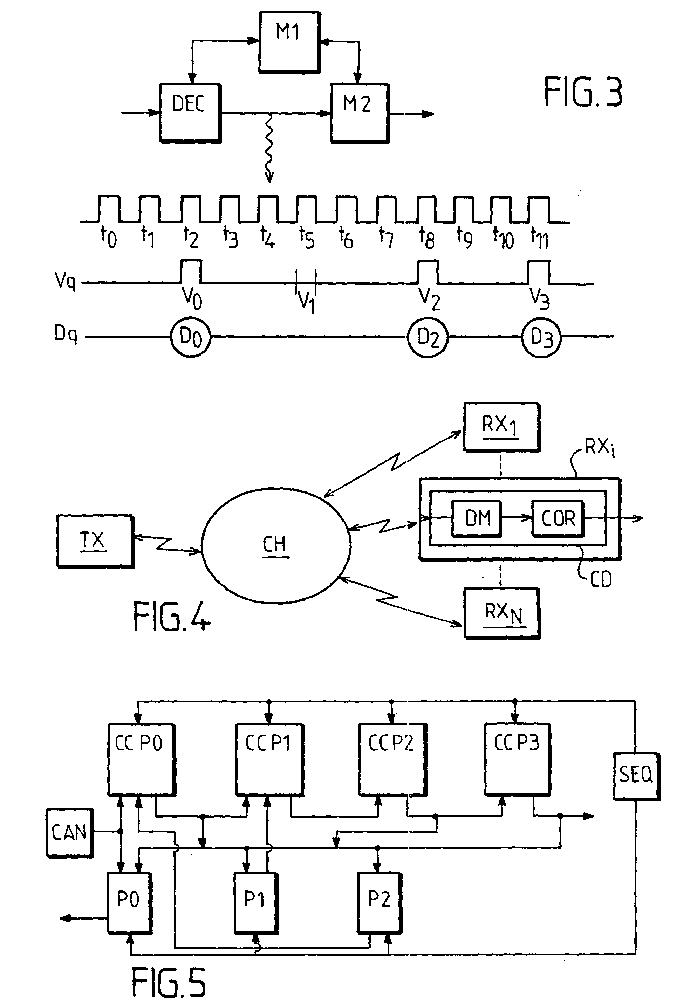

Sur la figure 3, on a représenté, à titre d'exemple, un dispositif selon l'invention dans lequel une ou plusieurs des données indiquées dans le tableau I ne sont pas reçues par le second module M2. Le dispositif de la figure 3 comporte un module supplémentaire DEC en amont du second module (il peut s'agir par exemple d'un module de décimation). Dans certains créneaux temporels $t_{3n+2}$, le module DEC ne produit aucun résultat. Toutefois, il fournit une donnée Dq au module M2 dans chaque créneau temporel $t_{3n+2}$, en associant un indicateur de validité Vq à chaque donnée Dq. Lorsque le module DEC ne produit pas de résultat (c'est le cas dans le créneau temporel $t_5$ sur la figure 3), l'indicateur de validité est positionné dans l'état « invalide » ($V_q=0$). Et lorsque le module M2 reçoit une donnée associée à un indicateur invalide, il interprète cette donnée comme étant non reçue, c'est-à-dire qu'il n'en tient pas compte. En revanche lorsque le module DEC produit un résultat (c'est le cas dans les créneaux temporels $t_2$, $t_8$ et $t_{11}$ sur la figure 3), l'indicateur de validité est placé dans l'état « valide » ($V_q=1$). Et lorsque le module M2 reçoit une donnée $D_q$ associée à un indicateur valide, il utilise ladite donnée.

TABLEAU II

| Créneau temporel | Donnée reçue | Indication d'opération reçue | $CO_i$ | $CD_i$ | Résultat produit |
|---|---|---|---|---|---|
| $t_0$ | | $c_0$ (j=3) | 3->2 | 0 | |
| $t_1$ | | $c_1$ (j=2) | 2->1 | 0 | |
| $t_2$ | $D_0$ | $c_2$(j=1) | 1->0 | +1-1=0 | |
| $t_3$ | | | 0 | 0 | |
| $t_4$ | | | 0 | 0 | |
| $t_5$ | | $c_3$ (j=0) | 0 | 0 | |
| $t_6$ | | $c_0$ (j=3) | 0 | 0 | |
| $t_7$ | | $c_1$ (j=2) | 0 | 0 | |
| $t_8$ | $D_2$ | $c_2$ (j=1) | 0 | +1 | |
| $t_9$ | | | | +1 | |
| $t_{10}$ | | | | +1 | |
| $t_{11}$ | $D_3$ | $c_3$ (j=0) | 0->3 | +1+1-1=+1 | $R_1$ |
| $t_{12}$ | | $c_0$ (j=3) | 3->2 | +1 | |
| $t_{13}$ | | $c_1$ (j=2) | 2->1 | +1 | |
| $t_{14}$ | $D_4$ | $c_2$ (j=1) | 1->0 | +1+1-1=+1 | |
| $t_{15}$ | | | | +1 | |
| $t_{16}$ | | | | +1 | |
| $t_{17}$ | $D_5$ | $c_3$ (j=0) | 0->3 | +1+1-1=+1 | $R_2$ |

Dans le tableau II on a représenté le fonctionnement d'un dispositif selon l'invention, lorsqu'une donnée n'est pas reçue (la donnée $D_1$ dans l'exemple décrit). Le premier module M1 fournit des instructions I au second module M2 dans chaque créneau temporel prévu, c'est-à-dire dans les créneaux temporels $t_{6n}$, $t_{6n+1}$, $t_{6n+2}$ et $t_{6n+5}$.

A l'instant initial le compteur d'opération $CO_i$ associé à la fonction traitée est égal à 3, puisque 4 opérations sont nécessaires pour obtenir un résultat. Et le compteur de données $CD_i$ associé à cette même fonction est initialisé à la valeur zéro.

Dans le créneau temporel $t_2$, le module M2 reçoit une donnée $D_0$ et une instruction I contenant une indication d'opération égale à 1 (ce qui correspond à l'opération c2). Le compteur d'opération $CO_i$ est aussi égal à 1 puisque deux opérations $c_0$ et $c_1$ ont déjà été exécutées dans les créneaux temporels $t_0$ et $t_1$ respectivement. Le compteur de données $CD_i$ est incrémenté d'une unité puisqu'une donnée est reçue ($CD_i=+1$). Une donnée étant nécessaire à l'exécution de l'opération $c_2$, il est ensuite décrémenté d'une unité de telle sorte qu'il prend finalement la valeur zéro ($CD_i=0$). L'instruction est donc exécutée, puis le compteur d'opération $CO_i$ est décrémenté d'une unité ($CO_i=0$).

Dans le créneau temporel $t_5$, la donnée $D_1$ n'est pas reçue. Mais le module M2 reçoit tout de même une instruction I contenant une indication d'opération égale à zéro ( ce qui correspond à l'opération $c_3$ qui aurait normalement dû être exécutée dans le créneau temporel $t_5$). Constatant qu'une donnée est nécessaire pour l'exécution de l'opération $c_3$,

le module M2 décrémente le compteur de données $CD_i$ d'une unité. Le compteur $CD_i$ prend donc la valeur -1. Les données nécessaires à l'exécution de l'opération $c_3$ n'étant pas disponibles, l'instruction reçue n'est pas exécutée.

Dans le créneau temporel $t_8$, le module M2 reçoit une donnée $D_2$ et une instruction qui contient une indication d'opération égale à 1 (en effet en se reportant au tableau I, on constate que c'est l'exécution de l'opération $c_2$ qui est planifiée dans le créneau temporel $t_8$). Le compteur de données $CD_i$ est donc incrémenté d'une unité ($CD_i$=0). Mais l'indication d'opération reçue (1) n'étant pas égale à la valeur du compteur d'opération $CO_i$ ($CO_i$=0), l'instruction n'est pas exécutée. Aucun résultat n'est donc délivré dans le créneau temporel $t_8$ (qui n'est pas un créneau temporel prévu pour la délivrance de résultat comme on peut le constater en reportant au tableau I).

Dans le créneau temporel $t_{11}$, le module M2 reçoit une donnée $D_3$, et une instruction qui contient une indication d'opération égale à 0 (opération $\bar{c}_3$). Le compteur de données $CD_i$ est donc incrémenté d'une unité ($CD_i$=+1). L'indication d'opération contenue dans l'instruction reçue est égale à la valeur du compteur d'opération. Comme l'exécution de l'opération $c_3$ entraîne la consommation d'une donnée, le compteur de données $CD_i$ est décrémenté d'une unité ($CD_i$=0), puis l'instruction est exécutée. Elle produit un résultat $R_1$. Le compteur d'opération $CO_i$ est ensuite réinitialisé à la valeur 3.

Ainsi, le résultat $R_1$ est produit dans le créneau temporel $t_{11}$ qui, comme indiqué dans le tableau I, est l'un des créneaux temporels prévus pour la délivrance de résultat lorsque toutes les données sont reçues dans les créneaux prévus.

Pour bien faire ressortir l'intérêt de l'invention, on a représenté dans le tableau III le fonctionnement que l'on pourrait obtenir, lorsque la donnée $D_1$ n'est pas reçue, si l'invention n'était pas appliquée.

TABLEAU III

| Créneau temporel | Donnée reçue | Opération à exécuter | Résultat produit |
|---|---|---|---|
| $t_0$ | | $c_0$ | |
| $t_1$ | | $c_1$ | |
| $t_2$ | $D_0$ | $c_2$ | |
| $t_3$ | | | |
| $t_4$ | | | |
| $t_5$ | | | |
| $t_6$ | | | |
| $t_7$ | | | |
| $t_8$ | $D_2$ | $c_3$ | $R_0$ |
| $t_9$ | | $c_0$ | |
| $t_{10}$ | | $c_1$ | |
| $t_{11}$ | $D_3$ | $c_2$ | |
| $t_{12}$ | | | |
| $t_{13}$ | | | |
| $t_{14}$ | $D_4$ | $c_3$ | $R_1$ |
| $t_{15}$ | | $c_0$ | |
| $t_{16}$ | | $c_1$ | |
| $t_{17}$ | $D_5$ | $c_2$ | |

Dans le créneau temporel $t_8$, le module M2 recevrait une donnée $D_2$ et une instruction en vue de l'exécution de l'opération suivante. Le module M2 exécuterait donc l'opération suivante $c_3$ et délivrerait un résultat $R_0$ dans le créneau temporel $t_8$, c'est-à-dire hors des créneaux temporels prévus pour la délivrance des résultats. Puis, il délivrerait un résultat $R_1$ dans le créneau temporel $t_{14}$, et ainsi de suite.

Deux solutions sont alors possibles pour faire face à cette situation. La première solution consiste à stocker dans une mémoire les résultats produits à des instants décalés, et à utiliser un programme pour gérer la lecture des résultats au moment voulu. Cette solution est assez complexe à mettre en oeuvre dans des dispositifs qui comportent plusieurs seconds modules, avec des transferts de données à gérer entre ces différents seconds modules. En particulier la validation du fonctionnement du dispositif peut se révéler très complexe dans ce cas. La seconde solution consiste à doubler les créneaux temporels prévus pour produire les résultats. En effet si l'on décide de définir à l'avance les créneaux temporels prévus pour la délivrance de résultats, il faut tenir compte du fait que les résultats peuvent être fournis dans les créneaux temporels $t_{6n+5}$ si aucune donnée n'est manquante, mais aussi les créneaux temporels $t_{6n+8}$ si une donnée n'est pas reçue. Finalement, il faut donc prévoir deux fois plus de créneaux temporels pour la délivrance des résultats. Ceci est très coûteux en terme de ressources.

Grâce à l'invention, les résultats sont produits dans les mêmes créneaux temporels, que les données d'entrée soient ou non reçues par le second module. Ainsi, le nombre de créneaux temporels prévus pour la délivrance de résultat est restreint au minimum nécessaire.

En se reportant au tableau II, on constate que dans le mode de réalisation de l'invention qui vient d'être décrit, aucun résultat n'est délivré dans le créneau temporel $t_5$, alors que le créneau temporel $t_5$ est un créneau temporel prévu pour la délivrance de résultats. Or il peut être avantageux que le second module délivre un résultat dans chacun des créneaux temporels prévus à cet effet. Dans un mode de réalisation avantageux, le second module M2 produit donc un résultat $R_n$ dans chacun des créneaux temporels $t_{6n+5}$ prévus à cet effet, en associant audit résultat un indicateur de validité de résultat $V'_n$. L'indicateur de validité de résultat est dans un état « invalide » lorsqu' aucun résultat n'est disponible, et dans un état « valide » lorsqu'un résultat est disponible. Ainsi, le module utilisateur des résultats produits saura déterminer si un résultat transmis dans un créneau temporel prédéterminé est valide ou non valide, c'est-à-dire utilisable ou non utilisable.

Des dispositifs selon l'invention sont par exemple utilisables pour faire des démodulateurs numériques programmables.

Sur la figure 4, on a représenté un exemple de système de transmission de données numériques selon l'invention. Il comporte un émetteur TX, un canal de transmission CH et une pluralité de récepteurs $RX_1$, ..., $RX_N$. Les transmissions s'effectuent par exemple par satellite, par câble, ou par voie hertzienne. Dans tous les cas, les récepteurs comportent de façon classique un dispositif de décodage canal CD qui contient un démodulateur numérique DM et un dispositif de décodage de codes correcteurs d'erreur COR. Mais les fréquences d'échantillonnage et les caractéristiques de la démodulation diffèrent selon le canal utilisé.

Il est donc intéressant de développer une structure programmable permettant de réaliser différents types de démodulateurs numériques.

Une grande partie des fonctions de démodulation s'effectuent grâce à une succession de filtres. C'est le cas par exemple de la transposition du signal modulé en bande de base, du filtrage anti-repliement, de l'interpolation, du filtrage de Nyquist, et de l'égalisation.

Pour réaliser une structure programmable dédiée à la démodulation, il est donc avantageux de disposer d'un module programmable dédié au filtrage. Un tel module a par exemple été proposé par la société KPENV dans la demande de brevet européen publiée sous le numéro 0926823-A1. Le module programmable proposé dans cette demande de brevet est prévu pour calculer plusieurs filtres, chaque calcul de filtre nécessitant l'exécution de plusieurs opérations. L'invention est par exemple applicable à un dispositif comportant un ou plusieurs seconds modules constitués par des modules programmables de ce type.

A titre d'exemple, on a représenté de façon schématique sur la figure 5 un démodulateur numérique pour transmissions par satellite. Ce démodulateur numérique comporte :

- un convertisseur analogique - numérique CAN qui reçoit des données d'entrée,
- une chaîne directe comportant quatre modules de filtrages programmables CCP0 à CCP3 tels que décrit dans la demande de brevet européen n° 0926823-A1, qui jouent le rôle de seconds modules au sens de l'invention, et qui remplissent les fonctions suivantes : génération du signal en bande de base, filtrage anti-repliement, filtrage mis en oeuvre par l'interpolation, filtrage de Nyquist et multiplication,
- une voie de retour comportant trois coprocesseurs P0 à P2 qui remplissent respectivement les fonctions suivantes : contrôle automatique de gain, récupération d'horloge et récupération de porteuse,
- un séquenceur SEQ qui contrôle les quatre modules de filtrage programmables et les quatre coprocesseurs (et qui joue donc le rôle de premier module au sens de l'invention).

Ces éléments sont connectés entre eux par l'intermédiaire d'un réseau d'interconnexion INT, de telle sorte que notamment :

- les données de sortie du convertisseur analogique - numérique CAN soient portée sur l'entrée du premier module de filtrage CCP0 d'une part et sur l'entrée du coprocesseur P0 qui est dédié au contrôle automatique de gain d'autre part,
- les modules de filtrage puissent se transmettre des résultats de façon appropriée, en fonction de la répartition des différentes fonctions de filtrage sur les différents modules de filtrage,

- la sortie du coprocesseur P2 qui est dédié à la récupération de porteuse soit portée sur l'entrée du module de filtrage dédié à la transposition en bande de base (CCP0 sur la figure),
- la sortie du coprocesseur P1 qui est dédié à la récupération d'horloge soit portée sur l'entrée du premier module de filtrage chargé de l'interpolation (CCP1 sur la figure).

L'invention a d'autres applications que celle qui vient d'être décrite en regard des figures 4 et 5. D'une façon générale un dispositif selon l'invention peut être utilisé de façon avantageuse dans tous les cas où l'on a besoin d'une architecture programmable et néanmoins statique, c'est-à-dire dans laquelle l'échange de données se fait selon un schéma pré-établi quel que soit le mode de programmation du dispositif.

**Revendications**

1. Dispositif comportant au moins un premier et un second modules, ledit premier module (M1) étant destiné à fournir des instructions (I) audit second module (M2), et ledit second module étant destiné à recevoir des données (D-IN) et à remplir au moins une fonction ($F_i$) qui nécessite l'exécution d'une succession d'opérations ($O_{i,j}$) pour produire un résultat ($R_n$) à partir d'une pluralité de données reçues,
   **caractérisé en ce que** :

   - ledit premier module est prévu pour fournir lesdites instructions au second module dans des créneaux temporels prédéfinis ($t_{6n}$, $t_{6n+1}$, $t_{6n+2}$, $t_{6n+5}$), lesdites instructions contenant au moins une indication d'opération (j),
   - ledit second module comporte un compteur d'opération ($CO_i$) destiné à indiquer l'opération suivante à exécuter, et un compteur de données ($CD_i$) destiné à comptabiliser les données reçues non utilisées,
   - et ledit second module est prévu pour n'exécuter une instruction que si l'indication d'opération contenue dans l'instruction coïncide avec l'opération suivante à exécuter telle qu'indiquée par son compteur d'opération, et si son compteur de données indique que les données nécessaires à l'exécution de cette opération sont disponibles.

2. Dispositif selon la revendication 1, **caractérisé en ce que** le second module est destiné à recevoir des données dans des créneaux temporels prédéfinis ($t_{3n+2}$), lesdites données ($D_q$) étant associées à un indicateur de validité de donnée ($V_q$), qui est dans un état « valide » lorsque la donnée est utilisable par le second module, et dans un état « invalide » lorsque la donnée n'est pas utilisable par le second module.

3. Dispositif selon la revendication 1, **caractérisé en ce que** ledit second module est prévu pour produire, dans des créneaux temporels prédéfinis ($t_{6n+5}$), des résultats ($R_n$) associés à un indicateur de validité de résultat $V'_n$), l'indicateur de validité de résultat étant dans un état « invalide » lorsqu' aucun résultat n'est disponible.

4. Dispositif selon la revendication 1, **caractérisé** ledit second module étant destiné à remplir une pluralité de fonctions ($F_i$), il comporte un compteur de données ($CD_i$) et un compteur d'opération ($CO_i$) pour chacune desdites fonctions, et en ce que les instructions (I) fournies par ledit premier module contiennent un indicateur de fonction (i) permettant audit second module de déterminer le compteur de données et le compteur d'opération à utiliser pour décider d'exécuter ou non une instruction.

5. Dispositif selon la revendication 1, **caractérisé en ce qu'**il comporte une pluralité de seconds modules (CCP0, CCP1, CCP2, CCP3) connectés de sorte que des résultats produits par au moins un second module constitue les données reçues par un autre second module.

6. Démodulateur programmable comportant un dispositif selon la revendication 1.

7. Récepteur comportant un démodulateur programmable selon la revendication 6.

8. Système de transmission comportant au moins un émetteur et un récepteur selon la revendication 7.

**Patentansprüche**

1. Anordnung mit mindestens einem ersten und einem zweiten Modul, wobei das besagte erste Modul (M1) dazu dient, um dem besagten zweiten Modul (M2) Anweisungen (I) zu liefern, und das besagte zweite Modul dazu dient, um Daten (D-IN) zu erhalten und mindestens eine Funktion ($F_i$) wahrzunehmen, die die Ausführung einer Operationsfolge ($O_{i,j}$) erfordert, um anhand einer Vielzahl erhaltener Daten ein Ergebnis ($R_n$) auszugeben, **dadurch gekennzeichnet, dass**:

- das besagte erste Modul vorgesehen ist, um dem besagten zweiten Modul die besagten Anweisungen in den vordefinierten Zeiträumen ($t_{6n}$, $t_{6n+1}$, $t_{6n+2}$ und $t_{6n+5}$) zu liefern, wobei die besagten Anweisungen mindestens eine Operationsanzeige (j) enthalten,
- das besagte zweite Modul einen Operationszähler ($CO_i$) enthält, um die nächste durchzuführende Operation anzuzeigen, und einen Datenzähler ($CD_i$), um die nicht verwendeten erhaltenen Daten zu verbuchen,
- und das besagte zweite Modul vorgesehen ist, um eine erhaltene Anweisung nur durchzuführen, wenn die Operationsanweisung, die in der erhaltenen Anweisung erhalten ist, mit der folgenden durchzuführenden Operation entsprechend der Anzeige seines Operationszählers zusammenfällt und wenn sein Datenzähler angibt, dass die zur Ausführung dieser Operation notwendigen Daten verfügbar sind.

2. Anordnung nach Anspruch 1, **dadurch gekennzeichnet, dass** das zweite Modul vorgesehen ist, um in den vordefinierten Zeiträumen ($t_{3n+2}$) Daten zu erhalten, wobei die besagten Daten ($D_q$) mit einem Gültigkeitsanzeiger des Datensatzes ($V_q$) verbunden wird, der im "gültigen" Zustand ist, wenn der Datensatz vom zweiten Modul verwendet werden kann, und in "ungültigem" Zustand ist, wenn der Datensatz vom zweiten Modul nicht verwendet werden kann.

3. Anordnung nach Anspruch 1, **dadurch gekennzeichnet, dass** das besagte zweite Modul vorgesehen ist, um in den vordefinierten Zeiträumen ($t_{6n+5}$) Ergebnisse ($R_n$) in Verbindung mit einem Gültigkeitsanzeiger des Ergebnisses ($V'_n$) auszugeben, wobei der Gültigkeitsanzeiger des Ergebnisses in einem "ungültigen" Zustand ist, wenn keinerlei Ergebnis zur Verfügung steht.

4. Anordnung nach Anspruch 1, **dadurch gekennzeichnet, dass** das besagte zweite Modul dazu bestimmt ist, eine Vielzahl Funktionen ($F_i$) zu erfüllen, sie einen Datenzähler ($CD_i$) und einen Operationszähler ($CO_i$) für jede der besagten Funktionen aufweist und dass die von dem besagten ersten Modul gelieferten Anweisungen (I) einen Funktionsanzeiger (i) enthalten, um es dem besagten zweiten Modul zu ermöglichen, die zu verwendenden Datenzähler und Operationszähler zu wählen, um die Ausführung einer Anweisung zu beschließen oder nicht.

5. Anordnung nach Anspruch 1, **dadurch gekennzeichnet, dass** sie eine Vielzahl zweiter Module (CCP0, CCP1, CCP2, CCP3) aufweist, derart geschaltet, dass die von mindestens einem zweiten Modul ausgegebenen Ergebnisse die von einem anderen zweiten Modul erhaltenen Daten bilden.

6. Programmierbarer Demodulator mit einer Anordnung nach Anspruch 1.

7. Empfänger mit einem programmierbaren Demodulator mit einer Anordnung nach Anspruch 6.

8. Übertragungssystem mit mindestens einem Sender und einem Empfänger nach Anspruch 7.

**Claims**

1. A device comprising at least a first and a second module, said first module (M1) being intended to supply instructions (I) to said second module (M2), and said second module being intended to receive data (D-IN) and to perform at least one function ($F_i$) that necessitates the execution of a succession of operations ($O_{i,j}$) so as to produce a result ($R_n$) based on a plurality of received data, **characterized in that**:

- said first module is provided for supplying said instructions to the second module in predefined time windows ($t_{6n}$, $t_{6n+1}$, $t_{6n+2}$ and $t_{6n+5}$), said instructions containing at least one operation indication (j),
- said second module comprises an operation counter ($CO_i$) intended to indicate the next operation to be executed, and a data counter ($CD_i$) intended to count the received unused data,
- and said second module is provided for executing a received instruction only if the operation indication contained in the received instruction coincides with the next operation to be executed such as indicated by its operation counter, and if its data counter indicates that the data necessary for the execution of this operation are available.

2. A device as claimed in claim 1, **characterized in that** the second module is intended to receive data in predefined time windows ($t_{3n+2}$), said data ($D_q$) being associated to an indicator of data validity ($V_q$) which is in a «valid» state when the data can be used by the second module, and in an «invalid» state when the data cannot be used by the second module.

3. A device as claimed in claim 1, **characterized in that** said second module is provided for producing, in predefined time windows ($t_{6n+5}$), results ($R_n$) associated to a result validity indicator ($V'_n$), the result validity indicator being in an «invalid» state when no result at all is available.

4. A device as claimed in claim 1, **characterized in that** said second module, which is intended to perform a plurality of functions (F;), comprises a data counter ($CD_i$) and an operation counter ($CO_i$) for each of said functions, and **in that** the instructions (I) produced by said first module contain a function indicator (i) which permits the second module to determine the data counter and the operation counter to be used for deciding the execution or not of an instruction.

5. A device as claimed in claim 1, **characterized in that** it comprises a plurality of second modules (CCP0, CCP1, CCP2, CCP3) connected so that results produced by at least one second module form the data received by another second module.

6. A programmable demodulator comprising a device as claimed in claim 1.

7. A receiver comprising a programmable demodulator as claimed in claim 6.

8. A transmission system comprising at least a transmitter and a receiver as claimed in claim 7.

FIG.1

FIG.2

FIG.3

FIG.4

FIG.5